# EUROPÄISCHE PATENTSCHRIFT

(11) **EP 1 992 465 B1**
(45) Veröffentlichungstag und Bekanntmachung des Hinweises auf die Patenterteilung: **10.08.2011**
(21) Anmeldenummer: 08009160.6
(22) Anmeldetag: 17.05.2008
(51) Int. Cl.: B29B 7/76

(54) **Sprühkopf**
Spray head
Tête de pulvérisation

(30) Priorität: 18.05.2007 DE 102007023238
(43) Veröffentlichungstag der Anmeldung: 19.11.2008
(73) Patentinhaber: FRIMO Group GmbH, 49504 Lotte (DE)
(72) Erfinder: Armin, Daniel, 63741 Aschaffenburg (DE); Sem, Kasper, 63457 Hanau (DE)
(74) Vertreter: HOFFMANN EITLE

(56) Entgegenhaltungen:
- DE-A1- 2 538 437
- DE-U1- 9 315 493
- GB-A- 1 407 616
- JP-A- 63 283 913
- JP-A- 2003 191 232
- US-A- 3 945 569
- US-A1- 2005 218 155
- US-B1- 6 746 001

## Beschreibung

### Technisches Gebiet

Die Erfindung betrifft einen Sprühkopf zur Herstellung von Polyurethanfolien, umfassend einen Mischblock und ein Sprührohr, mit einer in dem Mischblock enthaltenen Mischkammer, zumindest zwei in die Mischkammer einmündende Einspritzdüsen für zumindest ein Polyol und ein Di-Isocyanat sowie einen Stellkolben, der in der Mischkammer verschiebbar ist in eine Kurzschlussposition, in der sein vorderes Ende die Mündungen der Einspritzdüsen überdeckt und die daraus austretenden Substanzen über mindestens zwei in den Außenumfang des Stellkolbens eingreifende Nuten und Kurzschlussleitungen in einen Vorratstank zurückleitbar sind und zurückziehbar in eine Einspritzposition, in der die Mündungen der Einspritzdüsen freigegeben sind, um die daraus austretenden Substanzen in die Mischkammer einzuleiten, miteinander zu vermischen, zur Reaktion zu bringen, in das Sprührohr überzuleiten und aus diesem auszustoßen.

### Stand der Technik

Ein solcher Sprühkopf ist aus der US 7021498 B2 bekannt. Er gelangt insbesondere bei der Herstellung von Sprühfolien aus reaktiven Gemischen zur Anwendung, die z.B. als geschmacklich ansprechende Abdeckungen von Armaturentafeln in Kraftfahrzeugen zur Anwendung gelangen können. Dabei besteht das besondere Problem, dass die in der Mischkammer mit einander vermischten Komponenten miteinander reagieren. Die dabei eintretende Verfestigung kann zu fest haftenden Rückständen in der Mischkammer und dem Sprührohr führen, was eine erneute Inbetriebnahme behindert.

Aus der JP 63 283913 A ist ein sprühkopf gemäss dem Oberbegriff des Anspruchs 1 zur Herstellung von Polyurethanfolien umfassend einen Mischblock und ein Sprührohr, mit einer in dem Mischblock enthaltenen Mischkammer und zumindest zwei in die Mischkammer einmündende Einspritzdüsen bekannt. Ein Stellkolben ist in der Mischkammer verschiebbar angeordnet, so dass in einer Kurzschlussposition sein vorderes Ende die Mündungen der Einspritzdüsen überdeckt.

Die JP 2003 191232 A offenbart eine Mischvorrichtung, die in einen Umlaufzustand und einen Entladezustand durch Verschieben einer Kolbenstange, die Kanäle an den Seitenwänden aufweist und in einen Zylinder eingepasst ist, gebracht werden kann.

### Darstellung der Erfindung

Der Erfindung liegt die Aufgabe zu Grunde, eine solche Vorrichtung derart weiter zu entwickeln, dass sich auch beim intermittierenden Betrieb mit kurzen Einschaltzeiten und gegebenenfalls lange andauernden Unterbrechungen des Mischprozesses keine Störungen bei einer erneuten Inbetriebnahme ergeben.

Diese Aufgabe wird erfindungsgemäß bei einer Vorrichtung nach dem Oberbegriff durch die kennzeichnenden Merkmale von Anspruch 1 gelöst. Auf vorteilhafte Weiterbildungen nehmen die Unteransprüche Bezug.

Demgemäss ist es bei dem erfindungsgemäßen Sprühkopf vorgesehen, dass der Stellkolben einen Reinigungskanal enthält mit einer Spülmittelaustrittsöffnung, der in der der Mischkammer zugewandten Stirnfläche des Stellkobens mündet und mit einer Spülmitteleintrittsöffnung, in die nur in der Kurzschlussposition des Stellkolbens ein Spülmittel einpreßbar und in die Mischkammer einleitbar ist und wobei durch das aus der Spülmittelaustrittsöffnung austretende Spülmittel alle noch vorhandenen Restmengen und/oder Reaktionsrückstände der Substanzen aus der Mischkammer und dem Sprührohr austragbar sind. Durch diese Art des Spülmitteleintrags wird zudem als wesentlicher Vorteil erricht, dass in der Arbeitstellung des Stellkolbens, d.h. während des Sprühvorgangs, keinerlei Hohlräume, z.B. Querbohrungen und dergleichen mit gemischtem Reaktionsgemisch gefüllt werden können und dort, da nunmehr ohne Fließgeschwindigkeit zu festen Polyurethanpfropfen und/oder Polyurethan ablagerungen führen können. Es ist daher kein manueller Reinigungsvorgang vor einer erneuten Inbetriebnahme des Sprühkopfes erforderlich. Dieser kann vielmehr auch zur Herstellung von sehr kleinen und qualitativ sehr hochwertigen Sprühfolien eingesetzt werden, ohne das es zu Betriebsstörungen oder Qualitätseinbußen kommen kann. Eine Kontrolle der Reinigungswirkung ist regelmäßig nicht mehr nötig.

Weiter ist es vorgesehen, dass die Spülmittelaustrittsöffnung durch ein Rückschlagventil verschließbar ist, um ein Eindringen von Bestandteilen der Reaktionskomponenten während des Mischprozesses zu verhindern. Das Rückschlagventil hat dabei einen Ventilkegel, der gemeinsam mit seinem Ventilsitz in geöffnetem Zustand eine ringförmig ausgebildete Schlitzdüse bildet, die das Spülmittel am Ende des Stellkolbens unter einem spitzen Winkel und mit hohem Druck gegen die umlaufende Wandung der Mischkammer richtet, von wo es ohne nennenswerten Energieverlust die gesamte Innenwandung des Sprührohrs und der Sprühdüse überstreicht und intensiv reinigt. Dafür ist es anscheinend von wesentlicher Bedeutung, dass es in der Zwischenzone keine nennenswerten Richtungsänderungen gibt sowie eine stetige Verminderung der jeweils zu reinigenden, spezifischen Oberflächengröße.

Der Reinigungskanal wird durch eine Bohrung gebildet, die den Stellkolben zumindest in dem Bereich der Einspritzdüsen und der Stirnfläche konzentrisch durchdringt. Die Herstellung einer solchen Bohrung ist ganz besonders einfach.

Die Spülmitteleintrittsöffnung ist als Querbohrung des Stellkolbens ausgebildet, die nur in der Kurzschlussposition des Stellkolbens 5 mit einer Spülmittelversorgungsbohrung in Deckung bringbar ist.

Als Spülmittel kann unter erhöhtem Druck stehende Luft verwendet werden.

Der Stellkolben ist mit einem Antrieb verbunden, beispielsweise mit einem elektromotorischen Antrieb oder einem Kolbenantrieb. Er wird signalgesteuert in die Kurzschluss- oder Arbeitsposition verschoben. Falls ein Kolbenantrieb zur Anwendung gelangt, kann der darin enthaltene Antriebskolben durch ein druckbeaufschlagtes Strömungsmittel verschoben werden. Als druckbeaufschlagtes Strömungsmittel gelangt bevorzugt Druckluft oder Öl zur Anwendung.

Die Verwendung eines Reinigungskanals in dem Stellkolben, der in der Kurzschlussposition des Stellkolbens automatisch von der Spülflüssigkeit durchströmt wird, ist von erheblichem Vorteil, weil sich der Reinigungsprozess der Mischkammer und des Sprührohrs automatisch und ohne zeitliche Verzögerung unmittelbar an das Einspritzen der Reaktionskomponenten in die Mischkammer anschließt. Diese haben zu dem betreffenden Zeitpunkt noch keine feste Konsistenz und können dadurch durch das Sprührohr ausgetragen werden, bevor Anbackungen entstehen. Als Spülmittel gelangen Flüssigkeiten und/oder gasförmige Medien zur Anwendung, bevorzugt Druckluft, weil dadurch keine sekundäre Verunreinigung der Umwelt entstehen kann. Es ist lediglich erforderlich, das Sprührohr zuvor aus der Arbeitszone zu entfernen, um das dort befindliche Produkt nicht zu beschädigen. Dies kann programmgesteuert erfolgen.

Die Dauer und Intensität des Reinigungsprozesses hängt maßgeblich von der Art der zur Verarbeitung gelangenden Komponenten ab. Sie lässt sich durch einfache Versuche ermitteln und signalgesteuert fixieren, in dem die Reinigungsdauer und/oder die Durchflussmenge des dabei eingesetzten Reinigungsmittels im erforderlichen Maß verändert wird.

### Kurzbeschreibung der Zeichnung

Eine beispielhafte Ausführung der Erfindung ist in der beiliegenden Zeichnung dargestellt. Sie wird nachfolgend näher erläutert.

Es zeigen:
Fig. 1 einen Sprühkopf in längsgeschnittener Darstellung
Fig. 2 den Sprühkopf nach Fig. 1 in ebenfalls längsgeschnittener Darstellung, aber gedreht um einen Winkel von 90 °
Fig. 3 das Rückschlagventil am Ende des Stellkolbens

### Ausführung der Erfindung

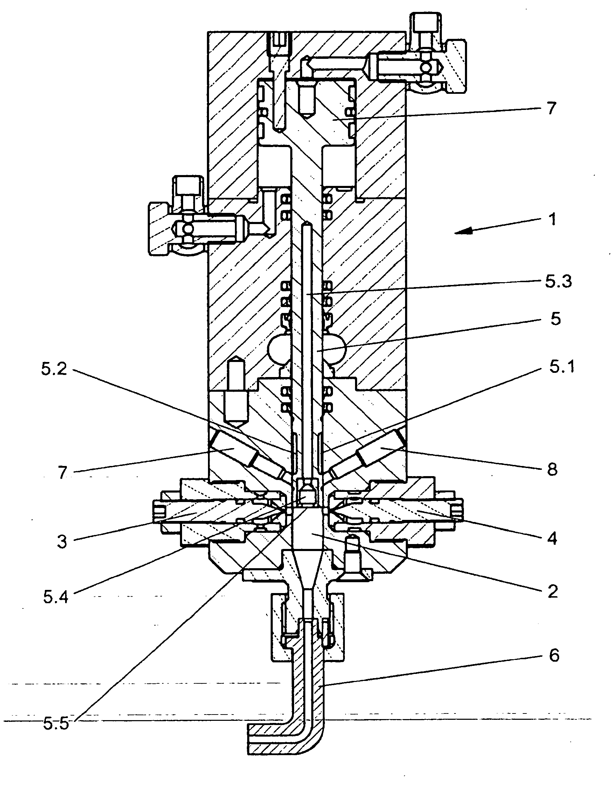

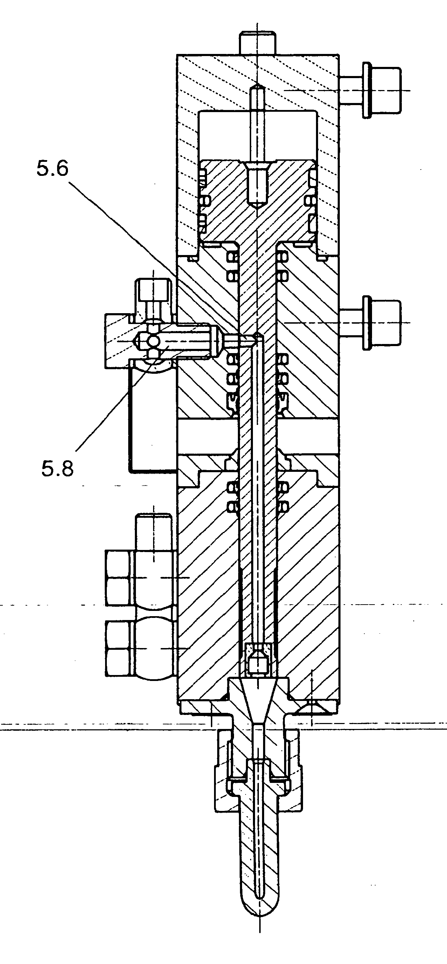

Der in Fig. 1 und Fig. 2 gezeigte Sprühkopf dient zur Herstellung von gewöhnlich als Sprühfolien bezeichneten Teilen aus Poylyurethan, die z.B. als dreidimensional verformte Abdeckungen auf Instrumententafeln in Kraftfahrzeugen zur Anwendung gelangen können.

Der Sprühkopf umfasst einen Mischblock 1 und ein damit verbundenes Sprührohr 6 mit einer Sprühdüse, die durch eine Überwurfmutter miteinander verschraubt sind. Der Mischblock enthält eine Mischkammer 2, zumindest zwei in die Mischkammer 2 einmündende Einspritzdüsen 3, 4 für ein Polyol und ein Di-Isocyanat sowie einen Stellkolben 5, der in der Mischkammer 2 verschiebbar ist in eine Kurzschlussposition, in der sein vorderes Ende die Mündungen der Einspritzdüsen 3, 4 überdeckt, wobei die daraus austretenden Substanzen über zwei in den Außenumfang des Stellkolbens 5 eingreifende Nuten 5.1, 5.2 und Kurzschlussleitungen 7, 8 in einen Vorratstank rezirkulierbar sind und zurückziehbar in eine Einspritzposition, in der die Mündungen der Einspritzdüsen 3, 4 freigegeben sind, um die daraus austretenden Substanzen in die Mischkammer 2 einzuleiten, miteinander zu vermischen, zur Reaktion zu bringen, in das Sprührohr 6 überzuleiten und aus diesem auszustoßen.

Der Stellkolben 5 enthält einen Reinigungskanal 5.3 mit einer Spülmittelaustrittsöffnung 5.4, der in der dem Mischblock 1 zugewandten Stirnfläche 5.5. des Stellkobens 5 mündet und mit einer Spülmitteleintrittsöffnung 5.6, wobei in die Spülmitteleintrittsöffnung 5.6 nur in der Kurzschlussposition des Stellkolbens 5 ein Spülmittel einpressbar und in das Sprührohr 6 einleitbar ist und wobei durch das aus der Spülmittelaustrittsöffnung 5.4 austretende Spülmittel Restmengen und/oder Reaktionsrückstände der Substanzen aus dem Sprührohr 6 und der Sprühdüse austragbar sind.

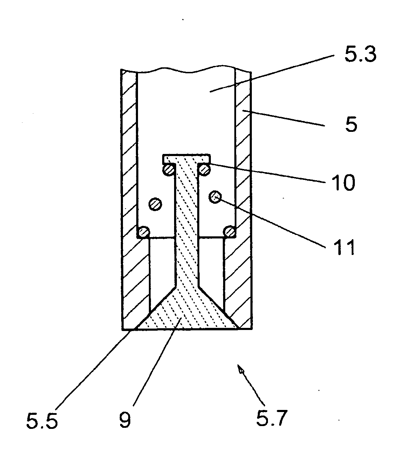

Die Spülmittelaustrittsöffnung 5.4 ist durch ein Rückschlagventil 5.7 verschließbar, das in Fig. 3 skizzenhaft wiedergegeben ist. Das Rückschlagventil enthält einen Ventilkegel 9, der an einem Ventilsitz des Stellkolbens anliegt, und eine Ventilschaft 10, auf dem eine Druckfeder 11 mit dem einen Ende abgestützt ist, während sich das andere Ende der Druckfeder auf einem umlaufenden Bund des Stellkobens 5 abstützt, der in den Reinigungskanal 5.3 eingreift.

Das Rückschlagventil befindet sich im Ruhezustand in der gezeigten Schließstellung. Es ist so dimensioniert, dass sich in der Schließstellung eine völlig ebene Stirnfläche des Stellkolbens 5 ergibt.

Beim Einspeisen eines Spülmittels unter erhöhtem Druck in den Reinigungskanal 5.3 wird die Druckfeder verformt und das Ventil 5.7 geöffnet mit der Folge, dass das Reinigungsmittel aus dem Ventil 5.7 austritt. Die Austrittsöffnung ist ringförmig ausgebildet und nach Art einer Schlitzdüse gestaltet, die das Spülmittel unmittelbar hinter dem Stellkolben unter einem spitzen Winkel gegen die ihn umschließende Wandung unmittelbar in Richtung des Sprührohrs und der Sprühdüse richtet, wo es eine intensive Reinigungswirkung entfaltet. In Abhängigkeit von dem Druck des Reinigungsmittels und der Dauer des Reinigungsvorgangs ist es so problemlos möglich, sämtliche Rückstände aus dem Sprührohr 6 und der Sprühdüse auszutragen, wodurch beides bei erneuter Inbetriebnahme erneut in völlig sauberem Zustand zur Verfügung steht, ohne das es einer gesonderten Reinigung bedarf.

Dafür ist es von besonderer Bedeutung, dass die Austrittsöffnung des Rückschlagventils 5.7 an dem der Austrittsöffnung gegenüberliegenden Ende er Mischkammer angeordnet und sowohl der Mischkammer als auch der Austrittsöffnung konzentrisch zugeordnet ist. Sie wird durch den Ventilkegel einerseits und den hohlkegeligen Ventilsitz andererseits begrenzt, die mit der Innenwand der Mischkammer einen spitzen Winkel von 30 bis 60 ° einschließen, vorzugsweise von 45 °, und ist so angeordnet, dass das aus dem ringförmigen Ventilspalt austretende Spülmittel in einem möglichst geringen Abstand von der Stirnfläche 5.5 auf die Innenwald der Mischkammer auftrifft, vorzugsweise in einem Abstand von 0,5 bis 3 mm. Die Innenwand wird dadurch während des Reinigungsprozesses in ihrer Gesamtheit von dem Spülmittel überspült und gereinigt. Da sich das Spülmittel in keiner Rotationsbewegung befindet, gelingt die Reinigung auch des Sprührohrs und der Sprühdüse ganz besonders gut.

Der Reinigungskanal 5.3 ist durch eine Bohrung gebildet, die den Stellkolben 5 zumindest in dem Bereich der Einspritzdüsen 3, 4 und der Stirnfläche 5.5 konzentrisch durchdringt. Er ist dadurch besonders einfach herstellbar.

Die Spülmitteleintrittsöffnung 5.6 ist als Querbohrung des Stellkobens 5 ausgebildet und nur in der Kurzschlussposition des Stellkobens 5 mit einer Spülmittelversorgungsbohrung 5.8 in Deckung bringbar. Das Spülmittel ist ein Fluid, bevorzugt unter erhöhtem Druck stehende Luft. Hierdurch wird vermieden, dass sich eine Verunreinigung der Umgebung ergeben kann, wen überschüssiges Spülmittel aus dem Sprührohr 6 austritt.

Der Stellkolben 5 ist mit einem Antriebskolben 7 verbunden und durch den Antriebskolben 7 signalgesteuert in die Kurzschluss- oder Arbeitsposition verschiebbar, wobei der Antriebskolben 7 durch ein druckbeaufschlagtes Strömungsmittel verschiebbar ist, beispielweise durch Druckluft.

Die Signalsteuerung bereitet keine Schwierigkeiten. Sie stellt sicher, dass der Sprühkopf stets verfügbar ist und dass Versäumnisse hinsichtlich des Reinigens nicht mehr zu befürchten sind.

## Patentansprüche

1. Sprühkopf, geeignet zur Herstellung von Polyurethanfolien, umfassend einen Mischblock (1) und ein Sprührohr (6), mit einer in dem Mischblock (1) enthaltenen Mischkammer (2), zumindest zwei in die Mischkammer (2) einmündende Einspritzdüsen (3, 4) für zumindest ein Polyol und ein Di-Isocyanat sowie einen Stellkolben (5), der in der Mischkammer (2) verschiebbar ist in eine Kurzschlussposition, in der sein vorderes Ende die Mündungen der Einspritzdüsen (3, 4) überdeckt und die daraus austretenden Substanzen über zwei in den Außenumfang des Stellkolbens (5) eingreifende Nuten (5.1, 5.2) und Kurzschlussleitungen (7, 8) in einen Vorratstank zurückleitbar sind, und zurückziehbar in eine Einspritzposition ist, in der die Mündungen der Einspritzdüsen (3, 4) freigegeben sind, um die daraus austretenden Substanzen in die Mischkammer (2) einzuleiten, miteinander zu vermischen, zur Reaktion zu bringen, in das Sprührohr (6) überzuleiten und aus diesem auszustoßen, wobei der Stellkolben (5) einen Reinigungskanal (5.3) enthält, der mit einer als Querbohrung ausgebildeten Spülmitteleintrittsöffnung (5.6) versehen ist sowie mit einer Spülmittelaustrittsöffnung (5.4), die in die der Mischkammer (1) zugewandten Stirnfläche (5.5) mündet, wobei der Stellkolben (5) mit einem Antriebskolben (7) verbunden und signalgesteuert in die Kurzschluss - oder Arbeitsposition verschiebbar ist, wobei der Mischblock (1) eine Spülmittelversorgungsbohrung (5.8) umfasst und die Spülmitteleintrittsöffnung (5.6) und die Spülmittelversorgungsbohrung (5.8) nur in der Kurzschlussposition des Stellkolbens (5) in Deckung bringbar sind, **dadurch gekennzeichnet, dass**
der Reinigungskanal (5.3) eine Spülmittdaustrittsöffnung (5.4) hat, die durch ein Rückschlagventil (5.7) verschließbar ist, und
das Rückschlagventil (5.7) in der der Spülmittdaustrittsöffnung (5.4) zugewandten Stirnfläche (5.5) des Stellkolbens (5) angeordnet und durch einen konzentrischen Ringspalt gebildet ist, der einerseits durch einen Ventilkegel und andererseits durch einen hohlkegeligen Ventilsitz begrenzt und sowohl der Mischkammer (2) als auch der Spülmittdaustrittsöffnung (5.4) konzentrisch zugeordnet ist.

2. Sprühkopf nach Anspruch 1, **dadurch gekennzeichnet, dass** der Ventilkegel und der Ventilsitz mit der Innenwand der Mischkammer (2) einen Winkel von 30 bis 60° einschließen und dass der **dadurch** begrenzte Ringspalt in einem so geringen Abstand von der Innenwand der Mischkammer (2) angeordnet ist, dass ein daraus austretendes Spülmittel in einem Abstand von 0,5 bis 3 mm von der Stirnfläche (5.5) auf die Innenwand der Mischkammer (2) auftrifft.

## Claims

1. Spray head, suitable for the manufacture of polyurethane films, comprising a mixing block (1) and a spray pipe (6) having a mixing chamber (2) contained in the mixing block (1), at least two injection nozzles (3, 4) leading into the mixing chamber (2) for at least one polyol and a diisocyanate, as well as a setting piston (5) which is slidable in the mixing chamber (2) into a short-circuit position in which its front end overlaps the mouths of the injection nozzles (3, 4) and the substances emerging therefrom can be conducted back into a storage tank via two grooves (5.1, 5.2) engaging in the outer circumference of the setting piston (5) and short-circuit pipes (7, 8), and is retractable into an injection position in which the mouths of the injection nozzles (3, 4) are cleared in order to introduce the substances emerging therefrom into the mixing chamber (2), mix them together, cause them to react, transfer them to the spray pipe (6) and eject them from the latter, wherein the setting piston (5) contains a cleaning channel (5.3) which is provided with an opening (5.6) designed as a transverse bore for the entry of flushing agent and with an opening (5.4) which leads into the end face (5.5) facing towards the mixing chamber (1) for the exit of flushing agent, wherein the setting piston (5) is connected to a drive piston (7) and, under the control of a signal, slidable into the short-circuit or working position, wherein the mixing block (1) comprises a bore (3.8) for the supply of flushing agent, and the opening (5.6) for the entry of flushing agent and the bore (5.8) for the supply of flushing agent can be brought into register only in the short-circuit position of the setting piston (3), **characterised in that** the cleaning channel (5.3) has an opening (5.4) which is closable by a non-return valve (5.7) for the exit of flushing agent, and the non-return valve (5.7) is arranged in the end face (5.5) of the setting piston (5) facing towards the opening (5.4) for the exit of flushing agent and formed by a concentric annular gap which is defined on the one hand by a valve cone and on the other hand by a hollow conical valve seat and is concentrically associated with both the mixing chamber (2) and the opening (5.4) for the exit of flushing agent.

2. Spray head according to claim 1, **characterised in that** the valve cone and the valve seat form with the inner wall of the mixing chamber (2) an angle from 30 to 60° and **in that** the annular gap defined thereby is arranged at such a short distance from the inner wall of the mixing chamber (2) that a flushing agent emerging therefrom impinges on the inner wall of the mixing chamber (2) at a distance of 0.5 to 3 mm from the end face (5.5).

## Revendications

1. Tête de pulvérisation, convenant pour la fabrication de feuilles de polyuréthane, comprenant un bloc de mélange (1) et un tube de pulvérisation (6), avec une chambre de mélange (2) contenue dans le bloc de mélange (1), au moins deux buses d'injection (3, 4), débouchant dans la chambre de mélange (2), pour au moins un polyol et un diisocyanate, ainsi qu'un piston de réglage (5), déplaçable dans la chambre de mélange (2), en une position de court-circuit, dans laquelle son extrémité avant recouvre les embouchures des buses d'injection (3, 4), et les substances en sortant étant susceptibles d'être reconduites dans un réservoir de stockage, par deux rainures (5.1, 5.2) s'engageant dans la périphérie extérieure du piston de réglage (5) et des conduites de court-circuit (7, 8), et rétractable en une position d'injection, dans laquelle les embouchures des buses d'injection (3, 4) sont dégagées, pour introduire les substances en sortant dans la chambre de mélange (2), les mélanger ensemble, les mettre en réaction, les transférer dans le tube de pulvérisation (6) et les expulser de celui-ci, le piston de réglage (5) contenant un canal de nettoyage (5.3), muni d'une ouverture d'entrée de milieu de rinçage (5, 6), réalisée sous forme de perçage transversal, ainsi que d'une ouverture de sortie de milieu de rinçage (5.4), débouchant dans la face frontale (5.5) tournée vers la chambre de mélange (2), le piston de réglage (5) étant relié à un piston d'entraînement (7) et déplaçable, sous la commande d'un signal, à la position de court-circuit ou de travail, le bloc de mélange (1) comprenant un perçage d'alimentation en milieu de rinçage (5.8), et l'ouverture d'entrée de milieu de rinçage (5, 6) et le perçage d'alimentation en milieu de rinçage (5.8) n'étant susceptibles d'être placés en coïncidence que dans la position de court-circuit du piston de réglage (5), **caractérisée en ce que**
le canal de nettoyage (5.3) présente une ouverture de sortie de milieu de rinçage (5.4), susceptible d'être obturée au moyen d'un clapet anti-retour (5.7), et
le clapet anti-retour (5.7) est disposé dans la face frontale (5.5), tournée vers l'ouverture de sortie de milieu de rinçage (5.4), du piston de réglage (5) et est formé par un intervalle annulaire concentrique, délimité, d'une part, par un cône de soupape et, d'autre part, par un siège de soupape conique creux et associé concentriquement, tant à la chambre de mélange (2) qu'également à l'ouverture de sortie de milieu de rinçage (5.4).

2. Tête de pulvérisation selon la revendication 1, **caractérisée en ce que** le cône de soupape et le siège de soupape font, avec la paroi intérieure de la chambre de mélange (2), un angle dans la fourchette comprise entre 30 et 60°, et **en ce que** l'intervalle annulaire, délimité de ce fait, est disposé à une distance de la paroi intérieure de la chambre de mélange (2) si faible qu'un milieu de rinçage, en sortant, frappe la paroi intérieure de la chambre de mélange (2) à une distance dans la fourchette de 0,5 à 3 mm de la face frontale (5.5).
